Europäisches Patentamt

European Patent Office

Office européen des brevets

(11) Publication number: 0 391 521
A2

# EUROPEAN PATENT APPLICATION

(21) Application number: 90301483.5

(22) Date of filing: 13.02.90

(51) Int. Cl.⁵: **F16L 37/00, F16L 47/00, B29C 65/56, B01D 63/00**

(30) Priority: 16.02.89 GB 8930540

(43) Date of publication of application:
10.10.90 Bulletin 90/41

(84) Designated Contracting States:
AT BE CH DE DK ES FR GB GR IT LI LU NL SE

(71) Applicant: W.L. GORE & ASSOCIATES (UK) LTD
1 Bell Yard
London WC2A 2JP(GB)

(72) Inventor: McCollam, Francis Michael John
51 Linefield Road, Carnoustie
Angus, Scotland(GB)
Inventor: Norman, Edward George
"Forthview", Hawkcraig Point, Aberdour
Fife, Scotland(GB)
Inventor: Bode, Stephen David
33 Commercial Street, Dundee
Tayside, Scotland(GB)

(74) Representative: McCallum, William Potter et al
Cruikshank & Fairweather 19 Royal
Exchange Square
Glasgow G1 3AE Scotland(GB)

(54) **A device having a porous polytetrafluoroethylene tube secured in an apertured wall, and the manufacture thereof.**

(57) In a device, for example a cross-flow filtration device, including a tube (1) of porous PTFE having an end (14) secured in an opening (2) through a wall (3) of the device, the end (14) of the tube is bell-shaped and fits within a correspondingly shaped portion (15) of the opening. The bell-shaped end of the tube is secured firmly in position generally by a tubular insert (16) located under compression within the bell-shaped end (14) of the tube in the opening. When the wall of the device is made of a suitable plastics material, however, the end of the tube may be secured, additionally or alternatively, by means of a heat bond formed by melting the surrounding portion (15) of the opening in contact with the bell-shaped end (14) of the tube.

Fig.2B.

# A DEVICE HAVING A POROUS POLYTETRAFLUOROETHYLENE TUBE SECURED IN AN APERTURED WALL, AND THE MANUFACTURE THEREOF

The invention relates to devices including a tube of porous polytetrafluoroethylene (PTFE) having one end secured in an apertured wall, and the manufacture of such devices.

The invention is particularly concerned with the construction of cross-flow filtration devices in which one or more porous tubular filter membranes are secured at at least one end in an apertured end plate, but is also applicable to other devices which employ porous tubular membranes, such as aeration or oxygenation devices, degassing devices, pervaporation devices, and heat exchange devices.

In a cross-flow filtration device, liquid containing a low concentration of suspended matter is passed at high velocity and under pressure (although not necessarily high pressure) through the porous tubular filter membrane or membranes. Since a force is created perpendicular to the tube surface, clear liquid passes outwardly through the walls of the filter membranes into, or to form, a transverse flow of filtrate. The solid particles tend to pass on down the tubular membranes so that the filtration device is essentially self cleaning and provides very efficient filtration rates and long filter life.

However, difficulty has arisen in the selection of suitable materials for the manufacture of the tubular filter membranes, and in the attachment of the membranes to the end plates, which are preferably of stainless steel or solid fluoroplastic material. One suitable material is expanded porous polytetrafluoroethylene (PTFE), such as that manufactured in accordance with U.S. Patents Nos. 3953566 and 4096227 and sold under the registered trade mark Gore-Tex. However, PTFE is difficult to bond to metal by adhesives, and suitable adhesives can give rise to tainting of food or other fluids to be filtered.

According to the present invention there is provided a device comprising at least one tube of porous PTFE having an end secured in an opening through a wall of the device, the end of the tube being bell-shaped and being fitted and secured firmly in position within a correspondingly shaped portion of the opening.

The bell-shaped end of the tube may be formed by cold deformation using a suitable dilating tool, or it may be formed simply by heating the end of the tube. It has been found, surprisingly, that heating the end of expanded porous PTFE tubing to a sufficient temperature results in expansion of the end of the tube by up to 25%, and that the expanded end does not fully recover when the tube is subsequently cooled, leaving the tube with a permanent bell-shaped end. The ability of porous PTFE tubing to expand to such an extent was quite unexpected and is believed to be uncharacteristic of plastics materials. Thermal expansion alone would account for only about a 1% change.

By providing the end of a porous PTFE tube with a bell-shape, it was found that a very strong and secure fitting of the tube end in an apertured end plate of a cross-flow filtration device could be obtained by providing the end plate with a correspondingly bell-shaped opening to receive the bell-shaped end of the tube, and suitably securing the end of the tube in the opening. Generally it will be preferred to secure the bell-shaped end of the tube in position by means of a tubular insert located under compression within the bell-shaped end of the tube. However, when the end plate is made of a suitable plastics material, the bell-shaped end of the tube may be secured in position, additionally or alternatively, by means of a heat bond formed between it and the interior surface of the correspondingly shaped portion of the opening.

According to the invention there is also provided a method of securing one end of a tube of expanded porous PTFE in an opening in a plate wherein the opening is provided with a bell-shaped portion and the method comprises inserting the end of the tube through the opening, causing the end of the tube to expand to a bell-shape of a dimension to fit closely within the bell-shaped portion of the opening, moving the tube back through the opening to bring the bell-shaped end of the tube into the bell-shaped portion of the opening, and urging a tubular insert into the end of the tube within the opening under compression to grip the bell-shaped end of the tube between the insert and the bell-shaped portion of the opening.

Preferably the tubular insert is a ferrule, preferably of stainless steel, having a uniform external diameter and the bell-shaped end of the tube is gripped between the outer surface of the ferrule and the surrounding bell-shaped portion of the opening.

The invention is applicable to devices in which the apertured wall or plate is of metal (preferably stainless steel), glass, ceramic, or a suitable plastics material, preferably a fluorocarbon plastics such as polyvinylidene fluoride (PVDF).

The bell-shaped portion of the opening in the wall or plate may be preformed before the bell-shaped end of the tube and the tubular insert are fitted in position in the opening. However, when the wall or end plate is made of plastics, the bell-shaped end of the tube and the bell-shaped portion of the opening may be formed simultaneously by heating the tubular insert as it is urged into the end of the tube, the end of the tube and the opening being expanded by the heat transferred from the tubular insert as the tube is moved back through the opening and the insert is urged into the tube.

Accordingly, the invention further provides a method of securing one end of the tube of expanded porous PTFE in an opening in a plate of heat deformable plastics material, comprising locating the end of the tube in the opening, and pressing a heated tubular insert into the end of the tube whereby the end of the tube is expanded to a bell-shape and the surrounding portion of the opening is simultaneously enlarged to form a bell-shaped portion in which the bell-shaped end of the tube is tightly fitted and clamped by the insert.

Preferably the tubular insert is heated sufficiently to cause the wall of the bell-shaped portion of the opening to melt and bond to the expanded bell-shaped end of the tube, thus further securing the end of the tube in the opening. In this case the use of the tubular insert to expand the end of the tube and the opening and to retain the tube in position may be dispensed with, the end of the tube and the opening being expanded and bonded together simply by pressing a suitably dimensioned and heated, removable member into the end of the tube within the opening.

Various embodiments of the invention will now be particularly described, by way of example, with reference to the accompanying drawings, in which:-

Figures 1A to 1D are sectional views, to an enlarged scale, illustrating different stages of one method in accordance with the invention of securing one end of a tubular filtration membrane of expanded porous PTFE within an opening in an end plate of a cross-flow filtration device;

Figures 2A and 2B are sectional views similar to those of Figure 1, but illustrating stages of a second example of the method in accordance with the invention; and,

Figures 3A and 3B are sectional views similar to those of Figure 2, but illustrating a third example of the method in accordance with the invention.

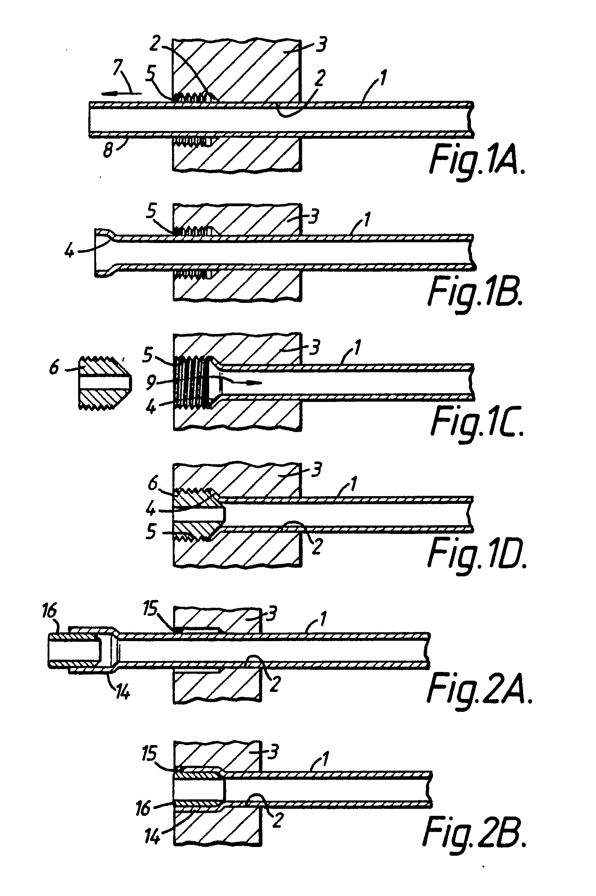

In the first example, one end of a tubular filtration membrane 1 made of porous expanded PTFE is secured in an opening 2 in an end plate 3 as shown in Figure 1D, the end 4 of the tubular membrane 1 having a bell-shape which seats at the root of an internally screw- threaded bell-shaped portion 5 of the opening 2 and is secured in position by an externally threaded tubular insert 6 which is screwed into the portion 5 of the opening so that the leading end of the insert 6 engages in the bell-shaped end 4 of the tube 1 to clamp it against the root of the bell-shaped portion 5.

The method of forming this connection is as follows. The internally screw-threaded bell-shaped portion 5 of the opening 2 in the end plate 3 is preformed, and the tubular filter membrane 1 is passed through the opening in the direction of the arrow 7 as shown in Figure 1A so that the end 8 of the tubular membrane projects beyond the face of the end Plate 3 containing the bell-shaped portion 5 of the opening 2. The end 8 of the tubular membrane 1 is then heated to between 350° and 600°C using a hot gas (e.g. nitrogen) to avoid direct flame charring, so that the end of the tube is expanded by about 25% to form the bell-shaped end portion 4 as shown in Figure 1B. As explained previously, this expanded end portion of the tube does not fully contract when subsequently cooled, and consequently the tube is formed with a permanent bell-shaped end portion 4 which can be pulled back into the bell-shaped portion 5 in the direction of the arrow 9 to the position shown in Figure 1C, but cannot be pulled back any further through the opening 2. The tubular insert 6 is then screwed tightly into the bell-shaped opening 5 to hold the bell shaped end 4 under compression within the opening 2.

As a modification to this method, the bell-shaped end portion 4 of the tubular filter membrane 1 may be formed by cold deformation using a tapered dilating tool to expand the end 8 of the tube instead of by heating the end 8. In a further modification the tubular insert 6 may be formed in two parts, consisting of a first smooth-walled cylindrical part for engaging and clamping the bell-shaped end of the tubular membrane against the wall of the opening, and a second externally threaded part which screws into the mouth of the opening to engage and hold the first part tightly in position.

In the example shown in Figures 2A and 2B, the opening 2 in the end plate 3 is preformed with a smooth walled bell-shaped portion 15 of substantially uniform diameter and, after passing the end of the expanded porous PTFE tubular filter membrane 1 through the opening 2 as in the first example, the end of the tube is heated or cold-dilated to form a bell-shaped end 14 of a shape corresponding substantially to that of the bell-shaped portion 15 of the opening 2 as shown in Figure 2A. A cylindrical metal insert 16, preferably of stainless steel, is then inserted partially into the bell-shaped end 14 of the tube, and the tube moved back through the opening 2 to bring its bell-shaped end into the bell-shaped portion 15 of the opening. The insert 16 is then pressed fully into the bell-shaped portion 15 of the opening using a suitable press tool so that the bell-shaped end 14 of the tube 1 is fitted tightly in the bell-shaped opening 15 and retained in this position under compression by the insert 16 as shown in Figure 2B.

In the two examples just described the end plate 3 may be made of stainless steel or a suitable plastics material. Preferably the plastics material will be a fluorocarbon plastics such as polyvinylidene fluoride (PVDF), a perfluoroalkoxy plastics (PFA), or a fluorinated ethylenepropylene (FEP), although other plastics materials may be used such as polyethersulfone (PES), or polyphenylene oxide (PPO).

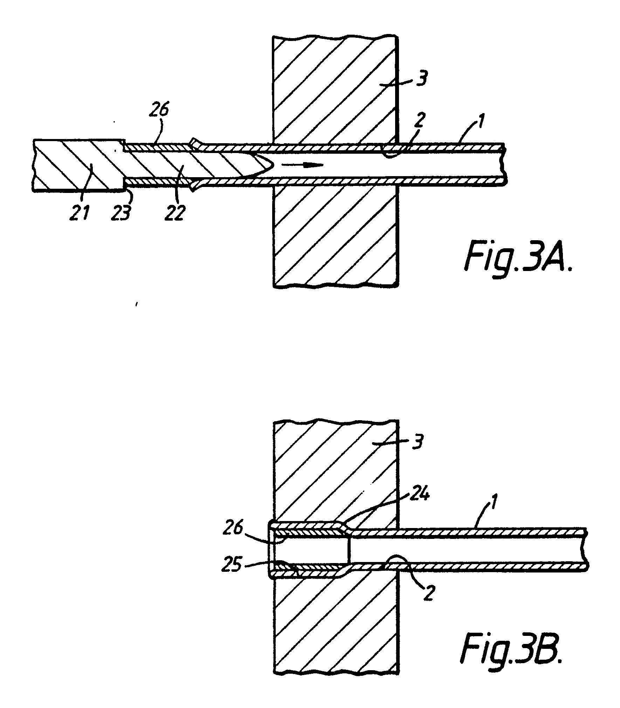

Figures 3A and 3B illustrate another example of the method in accordance with the invention which may be preferred when the end plate is made of PVDF or other suitable plastics material. In this case the opening 2 in the end plate 3 is not provided with a preformed bell-shaped portion as in the previous examples, and neither is the end of the expanded porous PTFE tubular membrane heated or otherwise deformed to form it into a bell-shape prior to being drawn back into the opening 2. Instead, the bell-shaped end 24 of the tube and the bell-shaped portion 25 of the opening 2 are formed substantially simultaneously as a heated cylindrical insert 26 is forced into the end of the tube 1 within the opening 2.

For this purpose, the tube 1 is first inserted through the opening 2 so that its end projects beyond the end plate 3 as in the first stage of the previous examples. A cylindrical ferrule 26 of stainless steel having an external diameter substantially equal to the internal diameter of the opening 2 is then placed over a rod-like portion 22 of a heating tool 21 until it abuts a shoulder 23. The tool 21, which resembles an electrical soldering iron, is then heated to at least 200°C, preferably more than 250°C, and the tapered tip of the rod-like portion 22 inserted into the open end of the tube 1 until the leading end of the ferrule 26 engages the end of the tube as shown in Figure 3A. The heating tool 21 is then used to push the tube back into the opening 2 until the leading end of the ferrule 26 reaches the opening, at which point the heating tool is used to force the ferrule 26 into the end of the tube 1 and the opening 2. The heat from the ferrule 26 and the rod-like portion 22 of the heating tool expands the end of the tube 1 and is transmitted to the surrounding wall of the opening 2 so as to soften the wall and enlarge the opening to accommodate the end of the tube 1 which is expanded as the ferrule is forced into it. The ferrule is pushed in until it reaches the position shown in Figure 3B, at which point the end of the tube 1 has been expanded to form a bell-shaped 24 surrounding the ferrule, and the opening has been deformed to form a corresponding bell-shaped portion 25 which is moulded tightly around the belled end 24 of the tube 1.

Indeed, if the heating tool 21 is heated to a temperature sufficient to have melted the material of the plate 3 defining the wall of the moulded bell-shaped portion 25, there may even be surface fusion between the wall and the tube 1 which bonds the two together in addition to the belled end 24 being tightly clamped in position by the inserted ferrule 26.

In a possible modification of this latter version of the method the ferrule 26 is omitted and a heating tool 21 is used with its portion 22 having an outer diameter approximately equal to or slightly greater than the internal diameter of the opening 2. This portion 22 of the heating tool is pressed directly into the end of the tube within the opening, causing the end of the tube to expand to the bell-shape 24 and the surrounding wall of the opening to melt and fuse to the end of the tube. The heating tool is then removed to leave the end 24 of the tube 1 heat bonded tightly with a correspondingly bell-shaped portion 25 of the opening 2.

In all of the examples which have been described, the end of the tubular filter membrane 1 is clamped in the opening 2 of the end plate 3 sufficiently tightly and strongly to withstand any pressure likely to be encountered during operation of a cross-flow filtration device without coming loose. Indeed, in tests carried out on a hydraulic test rig, water pressures applied to the left hand side of the end plate up to values sufficient to burst the tubular membrane itself were sustained without failure of the end fixings in accordance with the invention.

It will of course be appreciated, that although the drawings have illustrated the fixing of only one tubular filtration membrane within an end plate, a cross-flow filtration device will generally have a filter cartridge in which a large number of similar tubular filtration membranes are closely packed parallel to each other between a pair of spaced end plates in which the ends of each tube are secured. In a further test, filtration cartridges were made up using 127 tubular expanded porous PTFE membranes having their ends secured in the cartridge end plates in a manner in accordance with the invention. The cartridges were operated at water pressures up to 100 psi for two monthswithout sustaining any failure of the end fixings.

It will also be appreciated that although the examples have been described with reference to a cross-flow filtration device, the methods may also be used to secure the ends of porous PTFE tubes in an apertured plate for use in other devices such as aeration or oxygenation devices employed during aqueous based fermentation, waste treatment or blood oxygenation, or fish tank or fish farm aeration processes, degassing devices, pervaporation devices, and heat exchange devices etc.

Furthermore, if desired, the tubular porous PTFE membranes which are secured in accordance with the invention may have a reinforcing jacket of braided plastics yarn, preferably of PTFE, in order to prevent possible bursting of the tubes when operating at high pressures. Usually the jacket will be braided closely around the tubes before they are cut to length and fitted into the end plates, so that the braiding is also secured with the ends of the tubes in the end plate openings.

## Claims

1. A device comprising at least one tube (1) of porous polytetrafluoroethylene (PTFE) having an end (4;14;24) secured in an opening (2) through a wall (3) of the device, characterised in that the end (4;14;24) of the tube (1) is bell-shaped and is fitted and secured firmly in position within a correspondingly shaped portion (5;15;25) of the opening (2).

2. A device according to claim 1, in which the bell-shaped end (4;14;24) of the tube (1) is secured in position by a tubular insert (6;16;26) located under compression within the bell-shaped end of the tube.

3. A device according to claim 2, in which the tubular insert (16;26) is a ferrule having a uniform external diameter.

4. A device according to any one of the preceding claims, in which the porous PTFE tube (1) has a braided jacket of PTFE.

5. A device according to any one of the preceding claims, in which the wall (3) is of a plastics material and the bell-shaped end (24) of the tube (1) is heat bonded to the interior surface of the correspondingly shaped portion (25) of the opening (2).

6. A device according to claim 5, in which the plastics material of the wall (3) is polyvinylidenefluoride.

7. A method of securing one end of a tube (1) of expanded porous PTFE in an opening (2) in a plate (3) wherein the opening is provided with a bell-shaped portion (5;15;25) and the method comprises inserting the end (8) of the tube (1) through the opening (2), causing the end (8) of the tube to expand to a bell-shape (4;14;24) of a dimension to fit closely within the bell-shaped portion (5;15;25) of the opening, moving the tube (1) back through the opening (2) to bring the bell-shaped end (4;14;24) of the tube into the bell- shaped portion (5;15;25) of the opening, and urging a tubular insert (6;16;26) into the end of the tube within the opening under compression to grip the bell-shaped end (4;14;24) of the tube between the insert (6;16;26) and the bell-shaped (5;15;25) portion of the opening.

8. A method according to claim 7, in which the end of the tube is heated to cause it to expand to the bell-shape (4;14;24).

9. A method according to claim 7 or claim 8, in which the bell-shaped portion (5) of the opening (2) is internally screw-threaded, and the tubular insert (6) is correspondingly externally threaded and is screwed into the opening so that the leading end of the insert engages in the bell-shaped end (4) of the tube (1) to clamp it in the bell-shaped portion (5) of the opening.

10. A method according to claim 7 or claim 8, in which the tubular insert is a ferrule (16;26) having a uniform external diameter and the bell-shaped end (14;24) of the tube (1) is gripped between the outer surface of the ferrule (16;26) and the surrounding bell-shaped portion (15;25) of the opening (2).

11. A method according to claim 10, in which the ferrule (16) is inserted partially into the bell-shaped end (14) of the tube (1) before the tube is moved back through the opening (2) to bring its bell-shaped end (14) into the bell-shaped portion (15) of the opening (2), the insert (16) subsequently being pressed fully into the bell-shaped end (14) of the tube within the opening.

12. A method according to claim 8, in which the plate (3) is of plastics material and the tubular insert (26) is heated as it is urged into the end of the tube (1), and the bell-shaped end (24) of the tube (1) and the bell-shaped portion (25) of the opening (2) are formed simultaneously by the heat transferred from the tubular insert (26) as the tube is moved back through the opening and the insert is urged into the tube.

13. A method of securing one end of a tube (1) of expanded porous PTFE in an opening (2) in a plate (3) of heat deformable plastics material, comprising locating the end of the tube in the opening, and pressing a heated tubular insert (26) into the end of the tube (1) whereby the end of the tube is expanded to a bell-shape (24) and the surrounding portion of the opening (2) is simultaneously enlarged to form a bell-shaped portion (25) in which the bell-shaped end (24) of the tube is tightly fitted and clamped by the insert (26).

14. A method according to claim 12 or claim 13, in which the tubular insert (26) is heated sufficiently to cause the wall of the bell-shaped portion (25) of the opening (2) to melt and bond to the expanded bell-shaped end (24) of the tube (1).

15. A method according to any one of claims 12 to 14, in which the tubular insert (26) is heated and pressed into the end of the tube (1) by a heating tool (21) having a portion (22) which extends through the insert (26).

16. A method of securing one end of a tube (1) of expanded porous PTFE in an opening (2) in a plate (3) of heat deformable plastics material, comprising locating the end of the tube in the opening, and pressing a heated member into the end of the tube whereby the end of the tube is expanded to a bell-shape (24) and the surrounding portion of the opening (2) is simultaneously enlarged to form a bell-shaped portion (25) in which the bell-shaped end (24) of the tube (1) is tightly fitted, the member being heated sufficiently to cause the wall of the bell-shaped portion (25) of the opening (2) to melt and bond to the expanded bell-shaped end of the tube.

Fig.1A.

Fig.1B.

Fig.1C.

Fig.1D.

Fig.2A.

Fig.2B.

Fig.3A.

Fig.3B.